# EUROPÄISCHE PATENTSCHRIFT

(11) **EP 1 257 735 B1**
(45) Veröffentlichungstag und Bekanntmachung des Hinweises auf die Patenterteilung: **27.07.2005**
(21) Anmeldenummer: 01916882.2
(22) Anmeldetag: 26.01.2001
(51) Int. Cl.: F01N 3/00

(54) **VERFAHREN ZUM BETREIBEN EINER BRENNKRAFTMASCHINE INSBESONDERE EINES KRAFTFAHRZEUGS**
METHOD FOR OPERATING AN INTERNAL COMBUSTION ENGINE, ESPECIALLY IN A MOTOR VEHICLE
PROCEDE POUR FAIRE FONCTIONNER UN MOTEUR A COMBUSTION INTERNE, EN PARTICULIER LE MOTEUR D'UN VEHICULE AUTOMOBILE

(30) Priorität: 15.02.2000 DE 10006609
(43) Veröffentlichungstag der Anmeldung: 20.11.2002
(73) Patentinhaber: ROBERT BOSCH GMBH, 70442 Stuttgart (DE)
(72) Erfinder: ROTH, Andreas, 75417 Muehlacker-Lomersheim (DE); KORING, Andreas, 71636 Ludwigsburg (DE); RITTMANN, Beate, 71706 Markgroeningen (DE); BELLMANN, Holger, 71636 Ludwigsburg (DE); WINKLER, Klaus, 71691 Freiberg (DE)
(86) Internationale Anmeldenummer: PCT/DE2001/000303
(87) Internationale Veröffentlichungsnummer: WO 2001/061158

(56) Entgegenhaltungen:
- US-A- 5 642 705
- US-A- 5 910 096
- ANDO H ET AL: "MITSUBISHI GDI ENGINE STRATEGIES TO MEET THE EUROPEAN REQUIREMENTS" AVL TAGUNG MOTOR UND UMWELT - CONFERENCE ENGINE AND ENVIRONMENT,XX,XX, 1997, Seiten 55,57-70, XP000669906

## Beschreibung

### Stand der Technik

Die Erfindung betrifft ein Verfahren zum Betreiben einer Brennkraftmaschine insbesondere eines Kraftfahrzeugs, bei dem Kraftstoff in einer ersten Betriebsart während einer Ansaugphase oder in einer zweiten Betriebsart während einer Verdichtungsphase in einen Brennraum der Brennkraftmaschine eingespritzt wird, und bei dem ein Katalysator mit Abgasen beaufschlagt wird. Ebenfalls betrifft die Erfindung ein Steuergerät für eine Brennkraftmaschine insbesondere eines Kraftfahrzeugs sowie eine Brennkraftmaschine insbesondere für ein Kraftfahrzeug.

Ein derartiges Verfahren, ein derartiges Steuergerät und eine derartige Brennkraftmaschine sind beispielsweise bei einer sogenannten Benzin-Direkteinspritzung bekannt. Dort wird der Kraftstoff in einem Homogenbetrieb während der Ansaugphase oder in einem Schichtbetrieb während der Verdichtungsphase in den Brennraum der Brennkraftmaschine eingespritzt. Der Homogenbetrieb ist vorzugsweise für den Vollastbetrieb der Brennkraftmaschine vorgesehen, während der Schichtbetrieb für den Leerlauf- und Teillastbetrieb geeignet ist. Beispielsweise in Abhängigkeit von dem angeforderten Drehmoment wird bei einer derartigen direkteinspritzenden Brennkraftmaschine zwischen den genannten Betriebsarten umgeschaltet.

Für die Konvertierung von Abgasen in dem Katalysator der vorstehend beschriebenen Brennkraftmaschine ist es erforderlich, dass der Katalysator eine vorgegebene Betriebstemperatur aufweist.

Die US 5 910 096 A und/oder die US-A-5 642 705 offenboren den Einsatz von Nacheinspritzung zur Anhebung der Abgastemperatur.

Die beschriebene Brennkraftmaschine kann in einem Betriebspunkt betrieben werden, bei dem eine niedrige Abgastemperatur vorhanden ist. Ein derartiger Betriebspunkt liegt z.B. im Leerlaufbetrieb vor, bei dem die Brennkraftmaschine auf einer niedrigen Leerlaufdrehzahl betrieben wird.

In einem derartigen Leerlaufbetrieb wird wenig Kraftstoff in die Brennkraftmaschine eingespritzt. Dies kann zur Folge haben, dass der Katalysator aufgrund der geringen, entstehenden Abgastemperatur auskühlt. Damit ist eine Konvertierung und damit Reinigung der Abgase der Brennkraftmaschine nicht mehr gewährleistet.

### Aufgabe und Vorteile der Erfindung

Aufgabe der Erfindung ist es, ein Verfahren zum Betreiben einer Brennkraftmaschine zu schaffen, mit dem auch in Betriebspunkten mit einer niedrigen Abgastemperatur eine ausreichende Reinigung der Abgase gewährleistet ist.

Diese Aufgabe wird bei einem Verfahren der eingangs genannten Art erfindungsgemäß dadurch gelöst, dass in einem Betriebspunkt mit einer niedrigen Abgastemperatur eine Temperaturdifferenz zwischen einer Istabgastemperatur und einer Sollabgastemperatur ermittelt wird, und dass zumindest eine zusätzliche Einspritzung nach einer Verbrennung in Abhängigkeit von der Temperaturdifferenz durchgeführt wird. Bei einem Steuergerät und einer Brennkraftmaschine der jeweils eingangs genannten Art wird die Aufgabe entsprechend gelöst.

Durch die zusätzliche Einspritzung wird ein brennfähiges Gemisch im Bereich des Auspuffkrümmers oder des Katalysators erzeugt. Durch den noch heissen Auspuffkrümmer oder Katalysator wird dieses Gemisch entzündet und verbrannt. Die auf diese Weise erzeugte Wärme verhindert ein Auskühlen des Katalysators. Die Konvertierungsfähigkeit des Katalysators bleibt erhalten und eine Reinigung der Abgase ist somit auch in Betriebspunkten mit einer niedrigen Abgastemperatur gewährleistet.

Durch die Abhängigkeit der zusätzlichen Einspritzung von der Temperaturdifferenz zwischen der Istabgastemperatur und der Sollabgastemperatur wird gewährleistet, dass nur ein minimaler Mehrverbrauch durch das Aufheizen des Katalysators entsteht. Dies ist gleichbedeutend mit einer geringen zusätzlichen Abgas- bzw. Schadstofferzeugung durch das Katatlysatorheizen.

Bei einer vorteilhaften ersten Ausgestaltung der Erfindung wird ein minimales Lambda des Abgases festgelegt, und es wird die zumindest eine zusätzliche Einspritzung nach einer Verbrennung in Abhängigkeit von diesem minimalen Lambda begrenzt. Damit wird gewährleistet, dass das Lambda des Abgases nicht zu fett wird und damit einen zu hohen Schadstoffanteil aufweist.

Bei einer vorteilhaften zweiten Ausgestaltung der Erfindung wird ein festes Lambda des Abgases vorgegeben, es wird die zumindest eine zusätzliche Einspritzung nach einer Verbrennung in Abhängigkeit von diesem festen Lambda durchgeführt, und es wird der Einspritzbeginn der zusätzlichen Einspritzung verändert. Auf diese Weise wird ein vorgegebenes Lambda des Abgases gewährleistet. Damit der Katalysator in jedem Fall nicht überhitzt, wird gegebenenfalls der Einspritzbeginn der zusätzlichen Einspritzung verändert.

Besonders vorteilhaft ist es, wenn der Einspritzbeginn in Abhängigkeit von der Istabgastemperatur verändert wird. Damit kann eine Steuerung und/oder Regelung des Einspritzbeginns erreicht werden.

Bei einer vorteilhaften Weiterbildung der Erfindung werden die Anzahl und/oder die Zeitpunkte der zusätzlichen Einspritzungen derart gewählt, dass eine Betriebstemperatur des Katalysators nicht unterschritten wird und/oder der Katalysator nicht überhitzt. Diese Anzahl und/oder die Zeitpunkte können vorab ermittelt werden. Alternativ oder zusätzlich ist es möglich, die Anzahl und/oder die Zeitpunkte in Abhängigkeit von der aktuellen Temperatur des Katalysators zu steuern und/oder zu regeln.

Weiterhin ist es möglich, dass die Temperatur des Katalysators gemessen oder modelliert wird, und dass die zusätzlichen Einspritzungen nur dann durchgeführt werden, wenn eine Grenztemperatur unterschritten wird. Damit können Kraftstoff eingespart und Schadstoffemissionen vermieden werden.

Besonders vorteilhaft ist die Anwendung der Erfindung im Leerlauf und/oder in der zweiten Betriebsart der Brennkraftmaschine. Der Leerlauf stellt einen Betriebspunkt dar, bei dem eine niedrige Abgastemperatur auftreten kann, und bei dem der Katalysator deshalb seine Betriebstemperatur unterschreiten kann. Üblicherweise wird der Leerlauf bei einer direkteinspritzenden Brennkraftmaschine im Schichtbetrieb durchgeführt. Das erfindungsgemäße Verfahren kommt deshalb vorzugsweise im Schichtbetrieb und im Leerlauf der Brennkraftmaschine zum Einsatz.

Von besonderer Bedeutung ist die Realisierung des erfindungsgemäßen Verfahrens in der Form eines Steuerelements, das für ein Steuergerät einer Brennkraftmaschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory oder ein Flash-Memory.

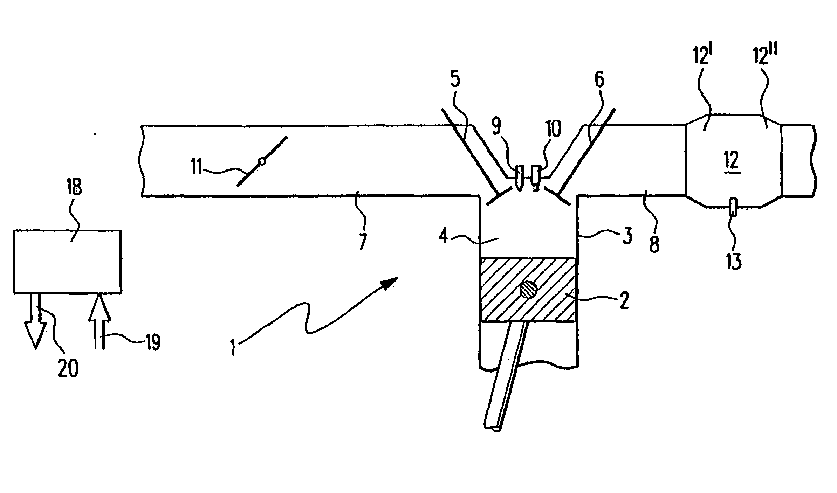

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

### Ausführungsbeispiele der Erfindung

Die einzige Figur der Zeichnung zeigt eine schematische Darstellung eines Ausführungsbeispiels einer erfindungsgemäßen Brennkraftmaschine.

In der Figur ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlassventil 5 und ein Auslassventil 6 begrenzt ist. Mit dem Einlassventil 5 ist ein Ansaugrohr 7 und mit dem Auslassventil 6 ist ein Abgasrohr 8 gekoppelt.

Im Bereich des Einlassventils 5 und des Auslassventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

Die Brennkraftmaschine 1 weist mehrere derartige Zylinder 3 mit zugehörigen Brennräumen 4, Kolben 2, Einlassventilen 5 und Auslassventilen 6 auf. Ebenfalls ist jedem der Zylinder 3 ein Einspritzventil 9 und eine Zündkerze 10 zugeordnet.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der der Reinigung der durch die Verbrennung des Kraftstoffs entstehenden Abgase dient.

Bei dem Katalysator 12 handelt es sich um einen Speicherkatalysator 12', der mit einem Dreiwegekatalysator 12" gekoppelt ist. Der Katalysator 12 ist damit unter anderem dazu vorgesehen, Stickoxide (NOx) zwischenzuspeichern und diese sowie Kohlenwasserstoffe (HC) zu konvertieren. Für die Konvertierung ist es erforderlich, dass der Katalysator 12 eine Betriebstemperatur von mindestens etwa 350 Grad Celsius aufweist. Unterhalb dieser Betriebstemperatur ist gar keine oder nur eine unvollständige Konvertierung vorhanden.

Ein Steuergerät 18 ist von Eingangssignalen 19 beaufschlagt, die mittels Sensoren gemessene Betriebsgrößen der Brennkraftmaschine 1 darstellen. Das Steuergerät 18 erzeugt Ausgangssignale 20, mit denen über Aktoren bzw. Steller das Verhalten der Brennkraftmaschine 1 beeinflusst werden kann. Unter anderem ist das Steuergerät 18 dazu vorgesehen, die Betriebsgrößen der Brennkraftmaschine 1 zu steuern und/oder zu regeln. Zu diesem Zweck ist das Steuergerät 18 mit einem Mikroprozessor versehen, der in einem Speichermedium, insbesondere in einem Flash-Memory ein Programm abgespeichert hat, das dazu geeignet ist, die genannte Steuerung und/oder Regelung durchzuführen.

In einer ersten Betriebsart, einem sogenannten Homogenbetrieb der Brennkraftmaschine 1, wird die Drosselklappe 11 in Abhängigkeit von dem erwünschten Drehmoment teilweise geöffnet bzw. geschlossen. Der Kraftstoff wird von dem Einspritzventil 9 während einer durch den Kolben 2 hervorgerufenen Ansaugphase in den Brennraum 4 eingespritzt. Durch die gleichzeitig über die Drosselklappe 11 angesaugte Luft wird der eingespritzte Kraftstoff verwirbelt und damit in dem Brennraum 4 im Wesentlichen gleichmäßig verteilt. Danach wird das Kraftstoff/Luft-Gemisch während der Verdichtungsphase verdichtet, um dann von der Zündkerze 10 entzündet zu werden. Durch die Ausdehnung des entzündeten Kraftstoffs wird der Kolben 2 angetrieben. Das entstehende Drehmoment hängt im Homogenbetrieb unter anderem von der Stellung der Drosselklappe 11 ab. Im Hinblick auf eine geringe Schadstoffentwicklung wird das Kraftstoff/Luft-Gemisch möglichst auf Lambda gleich Eins eingestellt.

In einer zweiten Betriebsart, einem sogenannten Schichtbetrieb der Brennkraftmaschine 1, wird die Drosselklappe 11 weit geöffnet. Der Kraftstoff wird von dem Einspritzventil 9 während einer durch den Kolben 2 hervorgerufenen Verdichtungsphase in den Brennraum 4 eingespritzt, und zwar örtlich in die unmittelbare Umgebung der Zündkerze 10 sowie zeitlich in geeignetem Abstand vor dem Zündzeitpunkt. Dann wird mit Hilfe der Zündkerze 10 der Kraftstoff entzündet, so dass der Kolben 2 in der nunmehr folgenden Arbeitsphase durch die Ausdehnung des entzündeten Kraftstoffs angetrieben wird. Das entstehende Drehmoment hängt im Schichtbetrieb weitgehend von der eingespritzten Kraftstoffmasse ab. Im Wesentlichen ist der Schichtbetrieb für den Leerlaufbetrieb und den Teillastbetrieb der Brennkraftmaschine 1 vorgesehen.

Bei einem Betrieb der Brennkraftmaschine 1, bei dem Kraftstoff im Homogenbetrieb oder im Schichtbetrieb in den Brennräumen 4 verbrannt wird, entstehen Abgase, die den Katalysator 12 beaufschlagen. Die daraus resultierende Konvertierung der Abgase stellt eine exotherme Reaktion dar, die zu einer Erwärmung des Katalysators 12 führt. Durch diese Erwärmung behält der Katalysator 12 seine für eine Konvertierung erforderliche Betriebstemperatur bei.

Bei der Steuerung und/oder Regelung der Brennkraftmaschine 1 durch das Steuergerät 18 sind im Homogenbetrieb und insbesondere im Schichtbetrieb Betriebspunkte vorhanden, in denen von der Brennkraftmaschine 1 nur eine niedrige Abgastemperatur erzeugt wird. Diese niedrige Abgastemperatur kann zur Folge haben, dass die für die Konvertierung erforderliche Betriebstemperatur des Katalysators 12 nicht erreicht oder unterschritten wird. Dies würde zu einer Verschlechterung der Abgasreinigung führen.

Zur Vermeidung einer derartigen Auskühlung des Katalysators 12 wird im Schichtbetrieb der Brennkraftmaschine in einem Betriebspunkt mit einer niedrigen Abgastemperatur zumindest eine zusätzliche Einspritzung nach einer Verbrennung, also in der Expansionsphase durchgeführt. Diese zusätzliche Einspritzung, die auch als Doppeleinspritzung bezeichnet werden kann, gelangt unverbrannt in das Abgasrohr 8 und zu dem Katalysator 12. Dort wird der zusätzlich eingespritzte Kraftstoff an dem heissen Abgasrohr 8 und/oder an dem noch heissen Katalysator 12 verbrannt. Durch diese Verbrennung wird Wärme erzeugt, die eine Auskühlung des Katalysators 12 verhindert.

Die Anzahl und/oder die Zeitpunkte derartiger Doppeleinspritzungen können von dem Steuergerät 18 derart gewählt werden, dass einerseits die für eine Konvertierung erforderliche Betriebstemperatur des Katalysators 12 nicht unterschritten wird, dass aber andererseits keine Überhitzung des Katalysators 12 stattfindet.

Hierzu wird von dem Steuergerät 18 eine Sollabgastemperatur vorgegeben, die beispielsweise der erforderlichen Betriebstemperatur des Katalysators 12 oder einer etwas größeren Grenztemperatur von beispielsweise 400 Grad Celsius entsprechen kann, und die in einem Kennfeld abgelegt sein kann. Diese Sollabgastemperatur wird mit der Istabgastemperatur verglichen, die von einem dem Katalysator 12 zugeordneten Temperatursensor 13 gemessen oder aus sonstigen Betriebsgrößen der Brennkraftmaschine 1 modelliert wird.

Die ermittelte Temperaturdifferenz wird mit einem Konvertierungsfaktor gewichtet, der der Heizenergie des Kraftstoffs entspricht. Ebenfalls wird die Temperaturdifferenz mit einem Energieumsetzungswirkungsgrad gewichtet, mit dem die Energieumsetzung in der Brennkraftmaschine 1 berücksichtigt wird. Dieser Wirkungsgrad kann in einem Kennfeld abgelegt sein, das von der zugeführten Luftmasse und/oder von der Drehzahl der Brennkraftmaschine 1 und/oder von dem Einspritzzeitpunkt des eingespritzten Kraftstoffs abhängig ist. Als Ergebnis wird diejenige Kraftstoffmasse erhalten, die erforderlich ist, um die Istabgastemperatur um die ermittelte Temperaturdifferenz auf die Sollabgastemperatur zu erhöhen, um also den Katalysator 12 aufzuheizen.

Damit das Lambda im Abgas nicht zu klein und damit zu fett wird, wird ein minimal zulässiges Lambda des Abgases vorgegeben. Aus diesem minimalen Lambda und der von der Brennkraftmaschine 1 aktuell angesaugten Luftmasse wird der jeweils aktuelle Gesamtwert der zuzuführenden Kraftstoffmasse ermittelt. Von diesem aktuellen Gesamtwert wird die zur Erzeugung des Drehmoments über das Einspritzventil 9 eingespritzte Kraftstoffmasse abgezogen. Ebenfalls werden gegebenenfalls weitere, z.B. von einer Tankentlüftung herrührende Kraftstoffmassen abgezogen. Die verbleibende Kraftstoffmasse stellt dann einen Maximalwert für die nach der Verbrennung zum Aufheizen des Katalysators 12 zuzuführende Kraftstoffmasse dar.

Alternativ ist es möglich, dass ein Lambda des Abgases fest vorgegeben wird. Aus diesem Lambda kann dann - wie vorstehend erläutert - eine verbleibende Kraftstoffmasse ermittelt werden, die jedoch in diesem Fall keinen Maximalwert, sondern genau diejenige Kraftstoffmasse darstellt, die zum Aufheizen des Katalysators 12 der Brennkraftmaschine 1 zugeführt wird. Zur Einhaltung der erwünschten Istabgastemperatur, insbesondere zur Vermeidung einer Überhitzung des Katalysators 12 kann vorgesehen sein, den Einspritzbeginn der zusätzlichen Einspritzung in der Expansionsphase entsprechend zu verändern. Diese Veränderung kann mit Hilfe des Temperatursensors 13 oder der modellierten Temperatur gesteuert und/oder geregelt werden.

Bei beiden Vorgehensweisen, also bei beschränktem oder bei festem Lambda, kann eine weitere Kraftstoffmasse von dem ermittelten Gesamtwert abgezogen werden, sofern die der Brennkraftmaschine 1 für das Aufheizen des Katalysators 12 zugeführte Kraftstoffmasse einen Beitrag zum Drehmoment der Brennkraftmaschine 1 leistet.

Der Leerlauf der Brennkraftmaschine 1 stellt einen Betriebspunkt mit einer niedrigen Abgastemperatur dar. Die vorstehend beschriebenen Verfahren werden von dem Steuergerät 18 deshalb insbesondere im Leerlauf der Brennkraftmaschine 1 durchgeführt. Der Leerlauf wird dabei bei der beschriebenen direkteinspritzenden Brennkraftmaschine vorzugsweise im Schichtbetrieb ausgeführt.

Gegebenenfalls, beispielsweise während des Warmlaufens der Brennkraftmaschine, kann der Leerlauf aber auch im Homogenbetrieb ausgeführt werden. In diesem Fall kann das beschriebene Verfahren entsprechend angewendet werden.

## Patentansprüche

1. Verfahren zum Betreiben einer Brennkraftmaschine (1) insbesondere eines Kraftfahrzeugs, bei dem Kraftstoff in einer ersten Betriebsart während einer Ansaugphase oder in einer zweiten Betriebsart während einer Verdichtungsphase in einen Brennraum (4) der Brennkraftmaschine (1) eingespritzt wird, bei dem ein Katalysator (12) mit Abgasen beaufschlagt wird, bei dem in einem Betriebspunkt mit einer niedrigen Abgastemperatur eine Temperaturdifferenz zwischen einer Istabgastemperatur und einer Sollabgastemperatur ermittelt wird, und bei dem zumindest eine zusätzliche Einspritzung nach einer Verbrennung in Abhängigkeit von der Temperaturdifferenz durchgeführt wird, **dadurch gekennzeichnet, dass** ein minimales Lambda des Abgases festgelegt wird, und dass die zumindest eine zusätzliche Einspritzung nach einer Verbrennung in Abhängigkeit von diesem minimalen Lambda begrenzt wird.

2. Verfahren zum Betreiben einer Brennkraftmaschine (1) insbesondere eines Kraftfahrzeugs, bei dem Kraftstoff in einer ersten Betriebsart während einer Ansaugphase oder in einer zweiten Betriebsart während einer Verdichtungsphase in einen Brennraum (4) der Brennkraftmaschine (1) eingespritzt wird, bei dem ein Katalysator (12) mit Abgasen beaufschlagt wird, bei dem in einem Betriebspunkt mit einer niedrigen Abgastemperatur eine Temperaturdifferenz zwischen einer Istabgastemperatur und einer Sollabgastemperatur ermittelt wird, und bei dem zumindest eine zusätzliche Einspritzung nach einer Verbrennung in Abhängigkeit von der Temperaturdifferenz durchgeführt wird, **dadurch gekennzeichnet, dass** ein festes Lambda des Abgases vorgegeben wird, dass die zumindest eine zusätzliche Einspritzung nach einer Verbrennung in Abhängigkeit von diesem festen Lambda durchgeführt wird, und dass der Einspritzbeginn der zusätzliche Einspritzung verändert wird.

3. Verfahren nach Anspruch 2, **dadurch gekennzeichnet, dass** der Einspritzbeginn in Abhängigkeit von der Istabgastemperatur verändert wird.

4. Verfahren nach einem der Ansprüche 1 bis 3, **dadurch gekennzeichnet, dass** die Anzahl und/oder die Zeitpunkte der zusätzlichen Einspritzungen derart gewählt werden, dass eine Betriebstemperatur des Katalysators (12) nicht unterschritten wird und/oder der Katalysator (12) nicht überhitzt.

5. Verfahren nach einem der Ansprüche 1 bis 4, **gekennzeichnet durch** die Anwendung im Leerlauf der Brennkraftmaschine (1).

6. Verfahren nach einem der Ansprüche 1 bis 5, **gekennzeichnet durch** die Anwendung in der zweiten Betriebsart der Brennkraftmaschine (1).

7. Steuerelelement, insbesondere Flash-Memory, für ein Steuergerät (18) einer Brennkraftmaschine (1) insbesondere eines Kraftfahrzeugs, auf dem ein Programm abgespeichert ist, das auf einem Rechengerät, insbesondere auf einem Mikroprozessor, ablauffähig und zur Ausführung eines Verfahrens nach einem der Ansprüche 1 bis 6 geeignet ist.

8. Steuergerät (18) zur Anwendung für eine Brennkraftmaschine (1) insbesondere eines Kraftfahrzeugs, wobei bei der Brennkraftmaschine (1) Kraftstoff in einer ersten Betriebsart während einer Ansaugphase oder in einer zweiten Betriebsart während einer Verdichtungsphase in einen Brennraum (4) einspritzbar ist, wobei ein Katalysator (12) mit Abgasen beaufschlagbar ist, wobei durch das Steuergerät (18) in einem Betriebspunkt mit einer niedrigen Abgastemperatur eine Temperaturdifferenz zwischen einer Istabgastemperatur und einer Sollabgastemperatur ermittelbar ist, und wobei zumindest eine zusätzliche Einspritzung nach einer Verbrennung in Abhängigkeit von der Temperaturdifferenz durchführbar ist, **dadurch gekennzeichnet, dass** ein minimales Lambda des Abgases festgelegt wird, und dass die zumindest eine zusätzliche Einspritzung nach einer Verbrennung in Abhängigkeit von diesem minimalen Lambda begrenzt wird.

9. Brennkraftmaschine (1) insbesondere für ein Kraftfahrzeug, bei der Kraftstoff in einer ersten Betriebsart während einer Ansaugphase oder in einer zweiten Betriebsart während einer Verdichtungsphase in einen Brennraum (4) ein eingespritzt wird, bei der ein Katalysator (12) mit Abgasen beaufschlagt wird, bei der durch ein Steuergerät (18) in einem Betriebspunkt mit einer niedrigen Abgastemperatur eine Temperaturdifferenz zwischen einer Istabgastemperatur und einer Sollabgastemperatur ermittelt wird, und bei der zumindest eine zusätzliche Einspritzung nach einer Verbrennung in Abhängigkeit von der Temperaturdifferenz durch geführt wird, **dadurch gekennzeichnet, dass** ein minimales Lambda des Abgases festgelegt wird, und dass die zumindest eine zusätzliche Einspritzung nach einer Verbrennung in Abhängigkeit von diesem minimalen Lambda begrenzt wird.

10. Steuergerät (18) zur Anwendung für eine Brennkraftmaschine (1) insbesondere eines Kraftfahrzeugs, wobei bei der Brennkraftmaschine (1) Kraftstoff in einer ersten Betriebsart während einer Ansaugphase oder in einer zweiten Betriebsart während einer Verdichtungsphase in einen Brennraum (4) einspritzbar ist, wobei ein Katalysator (12) mit Abgasen beaufschlagbar ist, wobei durch das Steuergerät (18) in einem Betriebspunkt mit einer niedrigen Abgastemperatur eine Temperaturdifferenz zwischen einer Istabgastemperatur und einer Sollabgastemperatur ermittelbar ist, und wobei zumindest eine zusätzliche Einspritzung nach einer Verbrennung in Abhängigkeit von der Temperaturdifferenz durchführbar ist, **dadurch gekennzeichnet, dass** ein festes Lambda des Abgases vorgegeben wird, dass die zumindest eine zusätzliche Einspritzung nach einer Verbrennung in Abhängigkeit von diesem festen Lambda durchgeführt wird, und dass der Einspritzbeginn der zusätzlichen Einspritzung verändert wird.

11. Brennkraftmaschine (1) insbesondere für ein Kraftfahrzeug, bei der Kraftstoff in einer ersten Betriebsart während einer Ansaugphase oder in einer zweiten Betriebsart während einer Verdichtungsphase in einen Brennraum (4) eingespritzt wird, bei der ein Katalysator (12) mit Abgasen beaufschlagt wird, bei der durch ein Steuergerät (18) in einem Betriebspunkt mit einer niedrigen Abgastemperatur eine Temperaturdifferenz zwischen einer Istabgastemperatur und einer Sollabgastemperatur ermittelt wird, und bei der zumindest eine zusätzliche Einspritzung nach einer Verbrennung in Abhängigkeit von der Temperaturdifferenz durchgeführt wird, **dadurch gekennzeichnet, dass** ein festes Lambda des Abgases vorgegeben wird, dass die zumindest eine zusätzliche Einspritzung nach einer Verbrennung in Abhängigkeit von diesem festen Lambda durchgeführt wird, und dass der Einspritzbeginn der zusätzlichen Einspritzung verändert wird.

## Claims

1. Method for operating an internal combustion engine (1), in particular of a motor vehicle, in which fuel is injected into a combustion chamber (4) of the internal combustion engine (1) during an induction phase in a first operating mode or during a compression phase in a second operating mode, in which a catalytic converter (12) is acted on by exhaust gas, in which a temperature difference between an actual exhaust gas temperature and a desired exhaust gas temperature is determined at an operating point with a low exhaust-gas temperature, and in which at least one additional injection is carried out after a combustion as a function of the temperature difference, **characterized in that** a minimum lambda of the exhaust gas is determined, and **in that** the at least one additional injection after a combustion is limited as a function of this minimum lambda.

2. Method for operating an internal combustion engine (1), in particular of a motor vehicle, in which fuel is injected into a combustion chamber (4) of the internal combustion engine (1) during an induction phase in a first operating mode or during a compression phase in a second operating mode, in which a catalytic converter (12) is acted on by exhaust gas, in which a temperature difference between an actual exhaust gas temperature and a desired exhaust gas temperature is determined at an operating point with a low exhaust-gas temperature, and in which at least one additional injection is carried out after a combustion as a function of the temperature difference, **characterized in that** a fixed lambda of the exhaust gas is predetermined, **in that** the at least one additional injection after a combustion is carried out as a function of this fixed lambda, and **in that** the start of the additional injection is altered.

3. Method according to Claim 2, **characterized in that** the start of injection is altered as a function of the actual exhaust-gas temperature.

4. Method according to one of Claims 1 to 3, **characterized in that** the number and/or instants of the additional injections are selected in such a manner that the temperature does not drop below an operating temperature of the catalytic converter (12) and/or the catalytic converter (12) is not overheated.

5. Method according to one of Claims 1 to 4, **characterized by** its use when the internal combustion engine (1) is in idling mode.

6. Method according to one of Claims 1 to 5, **characterized by** its use in the second operating mode of the internal combustion engine (1).

7. Control element, in particular flash memory, for a control unit (18) of an internal combustion engine (1), in particular of a motor vehicle, on which a programme which can run on a computer unit, in particular on a microprocessor, and is suitable for carrying out a method according to one of Claims 1 to 6 is stored.

8. Control unit (18) for use for an internal combustion engine (1), in particular of a motor vehicle, it being possible, in the internal combustion engine (1), for fuel to be injected into a combustion chamber (4) during an induction phase in a first operating mode or during a compression phase in a second operating mode, it being possible for a catalytic converter (12) to be acted on by exhaust gases, it being possible for the control unit (18) to determine a temperature difference between an actual exhaust-gas temperature and a desired exhaust-gas temperature at an operating point with a low exhaust-gas temperature, and it being possible to carry out at least one additional injection after a combustion as a function of the temperature difference, **characterized in that** a minimum lambda of the exhaust gas is determined, and **in that** the at least one additional injection after a combustion is limited as a function of this minimum lambda.

9. Internal combustion engine (1), in particular for a motor vehicle, in which fuel is injected into a combustion chamber (4) during an induction phase in a first operating mode or during a compression phase in a second operating mode, in which a catalytic converter (12) is acted on by exhaust gases, in which a control unit (18) determines a temperature difference between an actual exhaust-gas temperature and a desired exhaust-gas temperature at an operating point with a low exhaust-gas temperature, and in which at least one additional injection is carried out after a combustion as a function of the temperature difference, **characterized in that** a minimum lambda of the exhaust gas is determined, and **in that** the at least one additional injection after a combustion is limited as a function of this minimum lambda.

10. Control unit (18) for use for an internal combustion engine (1), in particular of a motor vehicle, it being possible, in the internal combustion engine (1), for fuel to be injected into a combustion chamber (4) during an induction phase in a first operating mode or during a compression phase in a second operating mode, it being possible for a catalytic converter (12) to be acted on by exhaust gases, it being possible for the control unit (18) to determine a temperature difference between an actual exhaust-gas temperature and a desired exhaust-gas temperature at an operating point with a low exhaust-gas temperature, and it being possible to carry out at least one additional injection after a combustion as a function of the temperature difference, **characterized in that** a fixed lambda of the exhaust gas is predetermined, **in that** the at least one additional injection after a combustion is carried out as a function of this fixed lambda, and **in that** the start of the additional injection is altered.

11. Internal combustion engine (1), in particular for a motor vehicle, in which fuel is injected into a combustion chamber (4) during an induction phase in a first operating mode or during a compression phase in a second operating mode, in which a catalytic converter (12) is acted on by exhaust gases, in which a control unit (18) determines a temperature difference between an actual exhaust-gas temperature and a desired exhaust-gas temperature at an operating point with a low exhaust-gas temperature, and in which at least one additional injection is carried out after a combustion as a function of the temperature difference, **characterized in that** a fixed lambda of the exhaust gas is predetermined, **in that** the at least one additional injection after a combustion is carried out as a function of this fixed lambda, and **in that** the start of the additional injection is altered.

## Revendications

1. Procédé de gestion d'un moteur à combustion interne (1), notamment d'un véhicule automobile, selon lequel
on injecte le carburant selon un premier mode de fonctionnement pendant la phase d'admission ou selon un second mode de fonctionnement pendant la phase de compression dans une chambre de combustion (4) du moteur à combustion interne (1), on soumet les gaz d'échappement à un catalyseur (12),
en un point de fonctionnement correspondant à une faible température des gaz d'échappement on détermine la différence de température entre la température réelle et la température de consigne des gaz d'échappement, et
on effectue au moins une injection complémentaire après la combustion en fonction de la différence des températures,
**caractérisé en ce qu'**
on fixe un coefficient lambda minimum des gaz d'échappement, et
on limite l'au moins une injection complémentaire après une combustion en fonction de ce coefficient lambda minimum.

2. Procédé de gestion d'un moteur à combustion interne (1), notamment d'un véhicule automobile, selon lequel
on injecte le carburant selon un premier mode de fonctionnement pendant la phase d'admission ou selon un second mode de fonctionnement pendant la phase de compression dans une chambre de combustion (4) du moteur à combustion interne (1),
on soumet les gaz d'échappement à un catalyseur (12),
en un point de fonctionnement correspondant à une faible température des gaz d'échappement on détermine la différence de température entre la température réelle et la température de consigne des gaz d'échappement, et
on effectue au moins une injection complémentaire après la combustion en fonction de la différence des températures,
**caractérisé en ce qu'**
on prédéfinit une valeur fixe du coefficient lambda pour les gaz d'échappement,
on effectue au moins une injection complémentaire après une combustion en fonction de ce coefficient lambda fixe, et
on modifie le début de l'injection complémentaire.

3. Procédé selon la revendication 2,
**caractérisé en ce qu'**
on modifie le début de l'injection en fonction de la température réelle des gaz d'échappement.

4. Procédé selon l'une des revendications 1 à 3,
**caractérisé en ce qu'**
on choisit le nombre et/ou les instants des injections complémentaires de façon à ne pas dépasser une température de fonctionnement du catalyseur (12) et/ou ne pas surchauffer le catalyseur (12).

5. Procédé selon l'une des revendications 1 à 4,
**caractérisé par**
son application au ralenti du moteur à combustion interne (1).

6. Procédé selon l'une des revendications 1 à 5,
**caractérisé par**
son application au second mode de fonctionnement du moteur à combustion interne (1).

7. Elément de commande notamment mémoire flash pour un appareil de commande (18) d'un moteur à combustion interne (1), notamment d'un véhicule automobile, contenant un programme qui peut être exécuté par un calculateur, notamment un microprocesseur, pour la mise en oeuvre du procédé de l'une des revendications 1 à 6.

8. Appareil de commande (18) appliqué à un moteur à combustion interne (1), notamment d'un véhicule automobile, pour lequel
- dans un premier mode de fonctionnement du moteur à combustion interne (1), le carburant est injecté pendant la phase d'admission, ou
- dans un second mode de fonctionnement, il est injecté pendant la phase de compression dans une chambre de combustion (4),
- un catalyseur (12) recevant les gaz d'échappement,
- l'appareil de commande (18) détermine en un point de fonctionnement à faible température des gaz d'échappement, une différence de température entre la température réelle et la température de consigne des gaz d'échappement, et
- au moins une injection complémentaire est faite après une combustion en fonction de la différence de température,
**caractérisé en ce qu'**
- on fixe un coefficient lambda minimum des gaz d'échappement, et
- on limite l'au moins une injection complémentaire après une combustion en fonction de ce coefficient lambda minimum.

9. Moteur à combustion interne (1) pour lequel
- dans un premier mode de fonctionnement du moteur à combustion interne (1), on injecte le carburant pendant la phase d'admission ou
- dans un second mode de fonctionnement on l'injecte pendant la phase de compression dans une chambre de combustion (4),
- on applique les gaz d'échappement à un catalyseur (12),
- on détermine avec l'appareil de commande (18), en un point de fonctionnement à faible température des gaz d'échappement, une différence de température entre la température réelle et la température de consigne des gaz d'échappement, et
- on effectue au moins une injection complémentaire après la combustion en fonction de la différence de température,
**caractérisé en ce qu'**
- on fixe un coefficient lambda minimum des gaz d'échappement, et
- on limite l'au moins une injection complémentaire après une combustion en fonction de ce coefficient lambda minimum.

10. Appareil de commande (18) applicable à un moteur à combustion interne (1), notamment d'un véhicule automobile, pour lequel :
- dans un premier mode de fonctionnement du moteur à combustion interne (1), le carburant est injecté pendant la phase d'admission ou
- dans un second mode de fonctionnement il est injecté pendant la phase de compression dans une chambre de combustion (4),
- un catalyseur (12) recevant les gaz d'échappement,
- l'appareil de commande (18) détermine en un point de fonctionnement à faible température des gaz d'échappement, une différence de température entre la température réelle et la température de consigne des gaz d'échappement, et
- on effectue au moins une injection complémentaire après la combustion en fonction de la différence de température,
**caractérisé en ce qu'**
- on prédéfinit un coefficient lambda fixe des gaz d'échappement,
- on effectue l'au moins une injection complémentaire après la combustion en fonction de ce coefficient lambda fixe, et
- on modifie le début de l'injection complémentaire.

11. Moteur à combustion interne (1) notamment pour un véhicule selon lequel
- dans un premier mode de fonctionnement du moteur à combustion interne (1), on injecte le carburant pendant la phase d'admission ou
- dans un second mode de fonctionnement on l'injecte pendant la phase de compression dans une chambre de combustion (4),
- on applique les gaz d'échappement à un catalyseur (12),
- on détermine avec l'appareil de commande (18), en un point de fonctionnement à faible température des gaz d'échappement, une différence de température entre la température réelle et la température de consigne des gaz d'échappement, et
- on effectue au moins une injection complémentaire après la combustion en fonction de la différence de température,
**caractérisé en ce qu'**
on prédéfinit un coefficient lambda fixe des gaz d'échappement, on effectue l'au moins une injection complémentaire après une combustion en fonction de ce coefficient lambda fixe, et
on modifie le début de l'injection complémentaire.
